(19) Europäisches Patentamt
European Patent Office
Office européen des brevets

(11) Veröffentlichungsnummer: 0 225 600
A2

(12) # EUROPÄISCHE PATENTANMELDUNG

(21) Anmeldenummer: 86116798.9

(22) Anmeldetag: 03.12.86

(51) Int. Cl.4: C07F 7/18 , C07C 91/40 , A23K 1/16

(30) Priorität: 11.12.85 DE 3543636
11.12.85 DE 3543637
22.03.86 DE 3609812

(43) Veröffentlichungstag der Anmeldung: 16.06.87 Patentblatt 87/25

(84) Benannte Vertragsstaaten: AT BE CH DE ES FR GB GR IT LI NL SE

(71) Anmelder: BAYER AG
Konzernverwaltung RP Patentabteilung
D-5090 Leverkusen 1 Bayerwerk(DE)

(72) Erfinder: Böshagen, Horst, Dr.
Wiesenstrasse 4
D-5657 Haan(DE)
Erfinder: Stoltefuss, Jürgen, Ing.grad.
Parkstrasse 20
D-5657 Haan 2(DE)
Erfinder: Berschauer, Friedrich, Dr.
Claudiusweg 9
D-5600 Wuppertal 1(DE)
Erfinder: de Jong, Anno, Dr.
Stockmannsmühle 46
D-5600 Wuppertal 1(DE)
Erfinder: Scheer, Martin, Dr.
Herberts-Katernberg 7
D-5600 Wuppertal 1(DE)

(54) **Verfahren zur Leistungsförderung bei Nutztieren, neue Aminophenylethylamin-Derivate und ihre Herstellung.**

(57) Die vorliegende Erfindung betrifft ein Verfahren zur Leistungsförderung von Nutztieren mit Hilfe von monosilylierten Aminophenylethylamin-Derivaten der allgemeinen Formel I

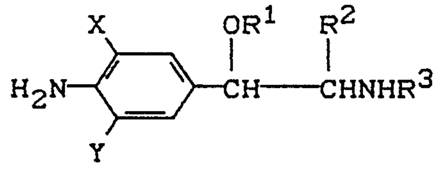

(I)

in der
X und Y gleich oder verschieden sind und für Wasserstoff, Halogen oder CN stehen.
R' für den Rest

EP 0 225 600 A2

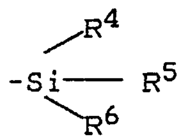

steht,

$R^2$ für Wasserstoff oder Methyl steht,

$R^3$ für t-Butyl, Isopropyl, Monofluor-t-butyl, 1-Cyclohexyl-ethyl steht,

$R^4$,$R^5$,$R^6$ einen geradkettigen oder verzweigten Alkylrest bedeuten,

das dadurch gekennzeichnet ist, daß man die Verbindungen der Formel (I) zu Beginn der Aufzuchtperiode verabreicht, sowie neue Verbindungen der Formel (I) und ihre Herstellung.

**Verfahren zur Leistungsförderung bei Nutztieren, neue Aminophenylethylamin-Derivate und ihre Herstellung**

Die vorliegende Erfindung betrifft ein Verfahren zur Leistungsförderung von Nutztieren, neue Aminophenylethylamin-Derivate und ihre Herstellung.

Die Verwendung von Futtermittelzusätzen zur Erzielung höherer Gewichtszuwächse und verbesserter Futterausnutzung wird in der Tiernahrung insbesondere bei der Mast von Schweinen, Rindern und Geflügel bereits weitgehend praktiziert.

1. Es wurde gefunden, daß die monosilylierten Aminophenylethylamin-Derivate der allgemeinen Formel (I)

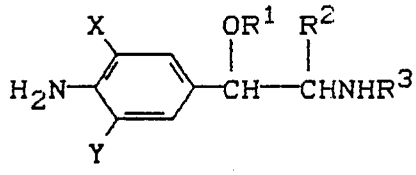

(I)

in der

X und Y gleich oder verschieden sind und für Wasserstoff, Halogen oder CN stehen,

$R^1$ für den Rest

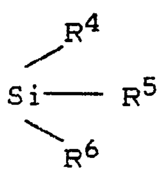

steht,

$R^2$ für Wasserstoff oder Methyl steht,

$R^3$ für t-Butyl, Isopropyl, Monofluor-t-butyl, 1-Cyclohexyl-ethyl steht,

$R^4$, $R^5$, $R^6$ einen geradkettigen oder verzweigten Alkylrest bedeuten,

und ihre physiologisch verträglichen Salze zur Leistungsförderung von Nutztieren in einem Varfahren verwendet werden können, das dadurch gekennzeichnet ist, daß man die Verbindungen der Formel I den Nutztieren zu Beginn der Aufzuchtperiode verabreicht.

Die Verbindungen der Formel (I) liegen als Diastereomere, Enantiomere oder in Form ihrer Gemische vor.

2. Es wurden die neuen Verbindungen der allgemeinen Formel (I)

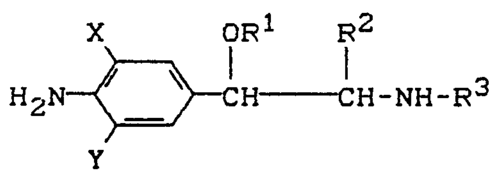

(I),

in der

X und Y gleich oder verschieden sind und für Wasserstoff, Halogen oder CN stehen,

$R^1$ für den Rest

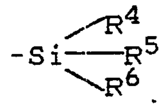

steht, in welchem $R^4$, $R^5$, $R^6$ einen geradkettigen oder verzweigten Alkylrest bedeuten, $R^2$ für Wasserstoff oder Methyl steht, $R^3$ für Monofluor-t-butyl, 1-Cyclohexyl-ethyl steht, und ihre physiologisch verträglichen Salze gefunden.

3. Man erhält die neuen Verbindungen der Formel (I)

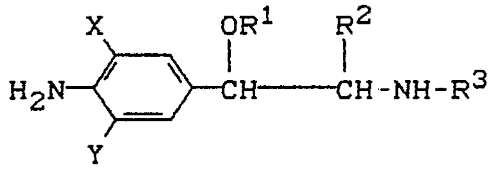

(I),

in welcher X und Y gleich oder verschieden sind und für Wasserstoff, Halogen oder CN stehen, $R^1$ für den Rest

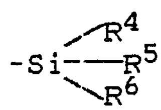

steht, in welchem $R^4$, $R^5$, $R^6$ einen geradkettigen oder verzweigten Alkylrest bedeuten, $R^2$ für Wasserstoff oder Methyl steht, $R^3$ für Monofluor-t-butyl, 1-Cyclohexyl-ethyl steht,

a) indem man Verbindungen der Formel (II)

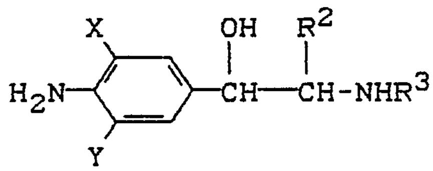

(II)

in welcher X, Y, $R^2$ und $R^3$ die oben angegebene Bedeutung besitzen, mit Silylierungsmitteln der Formel (III)

$R^4$, $R^5$, $R^6$ Si Z (III),

in der Z Halogen, CN, $OSO_2$-$CF_3$; -O-Si-$R^4R^5R^6$ oder -O-$SO_2$-O-Si-$R^4R^5R^6$ bedeutet, und $R^4$,$R^5$,$R^6$ die oben angegebene Bedeutung haben, umsetzt, oder

b) Verbindungen der Formel (IV)

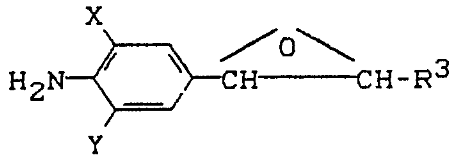

(IV)

in welcher
X,Y,$R^3$ die oben angegebene Bedeutung haben,
mit Verbindungen der Formel (V)

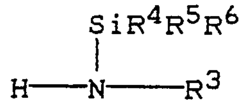

(V)

in welcher
$R^3$,$R^4$,$R^5$,$R^6$ die oben angegebene Bedeutung haben umsetzt.

4. Verbindungen der Formel (II)

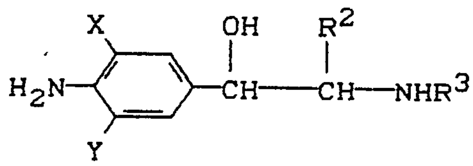

(II)

in welcher
X und Y unabhängig voneinander für Wasserstoff, Halogen oder CN stehen,
$R^2$ für Wasserstoff oder Methyl steht,
$R^3$ für Monofluor-t-butyl oder 1-Cyclohexyl-ethyl steht
sind neu.

5. Man erhält die Verbindungen der Formel (II)

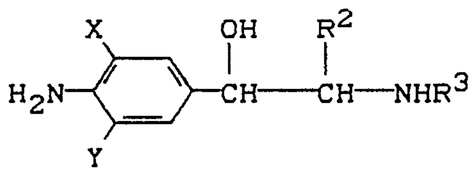

(II)

in welcher
in welcher
X,Y,$R^2$,$R^3$ die bei 4. (oben) angegebene Bedeutung haben,
indem man

a) Verbindungen der Formel (VI)

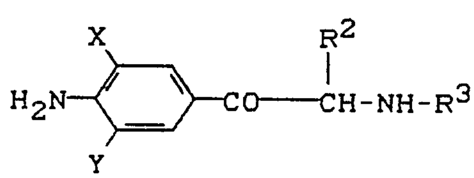

(VI),

in welcher
X,Y,$R^2$ und $R^3$ die oben angegebene Bedeutung besitzt,
katalytisch oder mit geeigneten Reduktionsmitteln wie z.B. Natriumborhydrid, Natriumcyanoborhydrid usw. reduziert, oder

b) Verbindungen der Formel (IV)

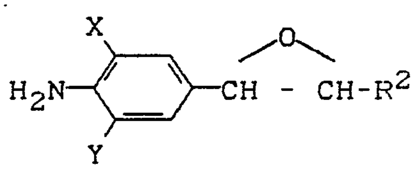

(IV),

in welcher
$R^2$ die oben angegebene Bedeutung hat,
mit einem Amin der Formel (VII)
$H_2N-R^3$, (VII)
in welcher
$R^3$ die oben angegebene Bedeutung hat,
umsetzt, oder

c) für den Fall von Verbindungen der Formel (II),
in welcher
X,Y,$R^3$ die oben angegebene Bedeutung haben und
$R^2$ für Wasserstoff steht
indem man Verbindungen der Formel (VIII)

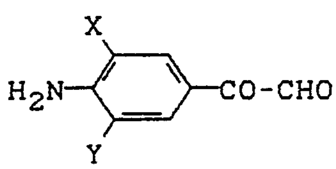

(VIII),

in welcher
X und Y die oben angegebene Bedeutung haben,
mit Verbindungen der Formel (VII)
$H_2N-R^3$
in welcher
$R^3$ die oben angegebene Bedeutung hat
in Gegenwart eines Reduktionsmittels wie z.B. Natriumborhydrid umsetzt.

6. Es wurde gefunden, daß die Verbindungen der Formel (II)

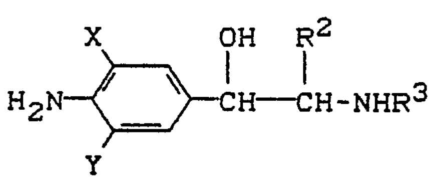

in welcher
X und Y unabhängig voneinander für Wasserstoff, Halogen oder CN stehen,
$R^2$ für Wasserstoff oder Methyl steht,
$R^3$ für Monofluor-t-butyl oder 1-Cyclohexyl-ethyl steht
und ihre physiologisch verträglichen Salze ausgezeichnete leistungsfördernde, insbesondere wachstumsfördernde Wirkung bei Tieren besitzen; z.B. bewirken sie eine Verbesserung des Fleisch/Fett-Verhältnisses zugunsten von Fleisch.

Die Verbindungen der Formel (II) liegen als Diastereomere bzw. als Enantiomere oder als Gemische derselben vor.

Das erfindungsgemäße Verfahren gemäß 1. (oben) zeigt bei Nutztieren ausgezeichnete wachstumsfördernde Wirkungen und bewirkt eine Verschiebung des Fleisch/Fett-Verhältnisses zugunsten von Fleisch.

Bevorzugt werden im erfindungsgemäßen Verfahren Phenylethylamin-Derivate der allgemeinen Formel - (I) eingesetzt, in der

X und Y für Chlor stehen,

$R^2$ für Wasserstoff steht und

$R^1$ und $R^3$ die oben angegebene Bedeutung haben,

sowie deren physiologisch verträglichen Salze.

Besonders bevorzugt werden Phenylethylamin-Derivate der Formel (I) eingesetzt, in der

X und Y für Chlor und

$R^1$ für $Si(CH_3)_2CH(CH_3)CH(CH_3)_2$ oder $Si(CH_3)_2C(CH_3)_2CH(CH_3)_2$ steht,

$R^2$ für Wasserstoff steht und

$R^3$ die oben angegebene Bedeutung hat,

sowie ihre physiologisch veträglichen Salze.

Ganz besonders bevorzugt sind Verbindungen der Formel (I) in welcher der Rest $R^3$ für 1-Cyclohexylethylamin steht, wobei diejenigen Diastereomeren besonders genannt seien bei denen die absolute Konfiguration bezogen auf C1 des Aminrestes R ist.

Beim erfindungsgemäßen Verfahren werden Verbindungen der Formel I in geeigneten Zubereitungen Nutztieren, bevorzugt einmalig, zu Beginn der Aufzuchtperiode verabreicht. Für diese Art der Behandlung wurde der Begriff Einmalapplikation gewählt.

Substanzen, die bei landwirtschaftlichen Nutztieren die Leistung verbessern, können entweder oral oder parenteral verabreicht werden, wobei die Verabreichungsdauer sehr unterschiedlich sein kann. Infolge der Rückstandsproblematik können viele Stoffe nicht bis unmittelbar vor dem Schlachten den Tieren verabreicht werden. Erfolgt die Substanzverabreichung über das Fertigfutter, ist das mit dem Wirkstoff versetzte Futter eine bestimmte Zeit vor dem Schlachten abzusetzen und durch ein wirkstofffreies Futter zu ersetzen, was in der Praxis häufig auf Schwierigkeiten stößt. Der wesentliche Vorteil einer Einmalapplikation liegt darin, daß die Substanzverabreichnung ohne Probleme exakt zum gewünschten Zeitpunkt erfolgen kann. Wenn die Dauer der Wirkung sowie das Rückstandsverhalten bekannt sind, kann bei richtiger Anwendung der günstige Effekt der Substanzverabreichung weitestgehend ausgenutzt werden, ohne daß noch Rückstände im Schlachtkörper vorhanden sind.

Als Tiere, bei denen das erfindungsgemäße Verfahren z.B. zur Förderung und Beschleunigung des Wachstums und zur Verbesserung der Futterverwertung eingesetzt werden können, seien beispielsweise Nutztiere genannt: Warmblüter wie Rinder, Schweine, Geflügel, z.B. Hühner.

Die Mengen der Wirkstoffe, die den Tieren zur Erreichung des gewünschten Effektes verabreicht wird, kann wegen der günstigen Eigenschaften der Wirkstoffe weitgehend variiert werden. Sie liegt vorzugsweise bei etwa 0,001 bis 50 mg/kg, insbesondere 0,1 bis 10 mg/kg Körpergewicht.

Die Wirkstoffe werden den Tieren nach den üblichen Methoden verabreicht. Die Art der Verabreichung hängt insbesondere von der Art, dem Verhalten und dem Gesundheitszustand der Tiere ab. So kann die Verabreichung oral oder parenteral erfolgen.

Das Verfahren eignet sich besonders für die parenterale Anwendung, wobei die Wirkstoffe in Form von Formulierungen mit geeigneten, vorzugsweise nicht wäßrigen, verträglichen Lösungs-bzw. Verdünnungsmitteln angewendet werden.

Geeignete Formulierungsmittel sind vorzugsweise physiolo gische Vegetabilien wie z.B. Sesamöl, Erdnußöl oder Maiskeimöl. Diese Öle oder auch andere synthetische Glyceride wie z.B. Miglycol® oder Myritol® können durch geeignete Zusätze verdickt werden wie z.B. gehärtetes Rizinusöl oder Al-Monostearat. Durch solche Kombinationen kann die Verteilung und Verweildauer im Tier in weiten Grenzen variiert werden.

Die Wirkstoffe können in reiner Form oder in formulierter Form, also in Mischung mit nicht-toxischen inerten Trägerstoffen beliebiger Art oral verabreicht werden.

Die Wirkstoffe werden gegebenenfalls in formulierter Form zusammen mit pharmazeutischen Wirkstoffen, Mineralsalzen, Spurenelementen, Vitaminen, Eiweißstoffen, Fetten, Farbstoffen und/oder Geschmacksstoffen verabreicht.

Die orale Verabreichung erfolgt vorzugsweise zusammen mit dem Futter, wobei je nach Bedarf der Wirkstoff der Gesamtmenge oder nur Teilen des Futters zugegeben wird.

Die Wirkstoffe werden bei oraler Verabreichung nach üblichen Methoden durch einfaches Mischen vorzugsweise in fein verteilter Form oder in formulierter Form in Mischung mit eßbaren nicht-toxischen Trägerstoffen, gegebenenfalls in Form eines Praemix oder eines Futterkonzentrates, dem Futter beigefügt.

Das Futter kann beispielsweise die Wirkstoffe in einer Gewichtskonzentration von etwa 0,01 bis 50°C, insbesondere 0,1 bis 50 ppm, enthalten. die optimale Höhe der Konzen tration der Wirkstoffe im Futter ist insbesondere abhängig von der Menge der Futteraufnahme der Tiere und kann durch jeden Fachmann leicht ermittelt werden.

Die Art des Futters und seine Zusammensetzung ist hierbei ohne Belang. Es können alle gebräuchlichen oder speziellen Futterzusammensetzungen verwendet werden, die vorzugsweise das übliche, für eine ausgewogene Ernährung notwendige Gleichgewicht hinsichtlich der Energie-und Proteinversorgung wie auch der Zufuhr von Vitaminen und Mineralstoffen sicherstellen. Das Futter kann sich beispielsweise zusammensetzen aus Einzelfuttermitteln pflanzlicher Nahrung, z.B. Heu, Rüben, Getreide, Getreidenebenprodukten, sowie tierischer Herkunft z.B. Fleisch, Fetten, Milchpulver, Knochenmehl, Fischprodukten. Weitere Einzelfuttermittel sind Vitamine, z.B. Vitamin A, D-Komplex und B-Komplex, Proteine, Aminosäuren, z.B. DL-Methionin und anorganische Stoffe, z.B. Kalk und Kochsalz.

Fertig-und Mischfuttermittel sind Ergänzungsfutter. Sie enthalten die Wirkstoffe neben Einzelfuttermitteln pflanzlicher und tierischer Herkunft wie z.B. Roggenmehl, Maismehl, Sojabohnenmehl, Mineralsalzen und Vitaminen und synthetischen Aminosäuren. Sie können nach den üblichen Mischmethoden hergestellt werden.

Beispiel für die Zusammensetzung eines Kükenaufzuchtfutters, das Wirkstoff enthält:
200 g Weizen, 340 g Mais, 361 g Sojaschrot, 60 g Rindertalg, 15 g Dicalciumphosphat, 10 g Calciumcarbonat, 4 g 2,5 g Wirkstoff-Praemix bestehen z.B. aus 10 mg Wirkstoff, 1 g DL-Methionin sowie so viel Sojabohnenmehl, daß 2,5 g Praemix entstehen.

Beispiel für die Zusammensetzung eines Schweineaufzuchtfutters, das Wirkstoff enthält:
630 g Futtergetreideschrot (zusammengesetzt aus 200 g Mais, 150 g Gerste-, 150 g Hafer-und 130 g Weizenschrot), 80 g Fischmehl, 60 g Sojaschrot, 60 g Tapiokamehl, 38 g Bierhefe, 50 g Vitamin-Mineral-Mischung für Schweine, 30 g Leinkuchenmehl, 30 g Maiskleberfutter, 10 g Sojaöl, 10 g Zuckerrohrmelasse und 2 g Wirkstoff-Praemix (Zusammensetzung z.B. wie beim Kükenfutter) ergeben nach sorgfältigem Mischen 1 kg Futter.

Die angegebenen Futtergemische sind zur Aufzucht und Mast von vorzugsweise Küken bzw. Schweinen abgestimmt, sie können jedoch in gleicher oder ähnlicher Zusammensetzung auch zur Aufzucht und Mast anderer Tiere verwendet werden.

Die Verbindungen der Formel (I) sind zum Teil neu. Die neuen Verbindungen der Formel (I) sind unter 2. (oben) zusammengefaßt. Sie können nach dem unter 3. (oben) aufgeführten Herstellungsverfahren a) und b) erhalten werden.

Verfahren 3a) läßt sich durch folgendes Formelschema wiedergeben

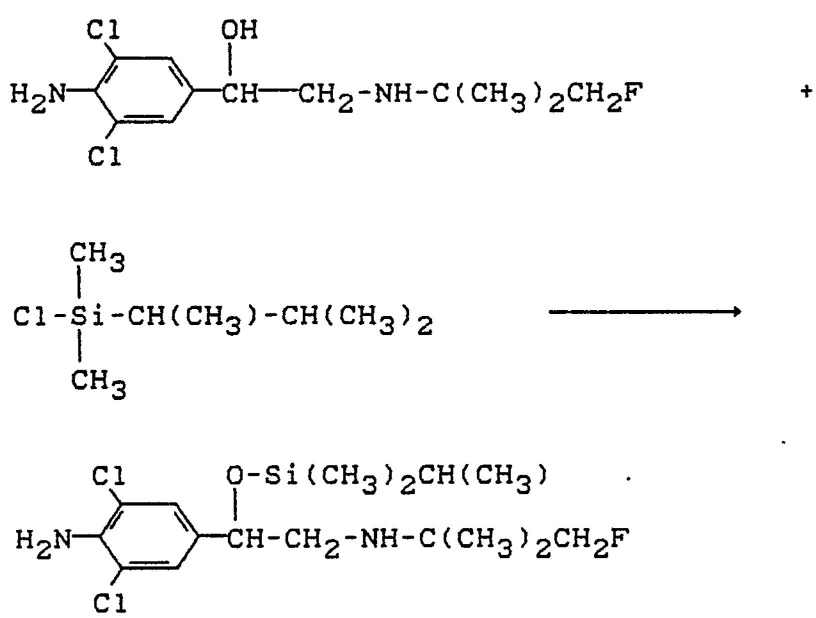

Die Verbindungen der Formel (II) sind neu und können nach einem der weiter unten anggebenen Verfahren hergestellt werden.

Die Verbindungen der Formel (III) sind bekannt.

Die Umsetzung der Verbindungen der Formeln (II) und (III) erfolgt nach allgemein bekannten Verfahren. Sie werden im allgemeinen in etwa äquimolarem Verhältnis eingesetzt. Es kann jedoch vorteilhaft sein, das Silylierungsmittel der Formel (III) in einem Überschuß von bis zu 300 % bezogen auf die Verbindung der Formel (I) einzusetzen.

Das Verfahren kann in Gegenwart von Verdünnungsmitteln durchgeführt werden. Als Verdünnungsmittel kommen alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Methylenchlorid, Ethylenchlorid, Chloroform, Tetrachlorkohlenstoff, Chlorbenzol und o-Dichlorbenzol, ferner Ether, wie Diethyl-und Dibutylether, Glykoldimethylether und Diglykoldimethylether, Tetrahydrofuran und Dioxan, weiterhin Ketone, wie Aceton, Methylethyl-, Methylisopropyl-und Methylisobutylketon, außerdem Ester, wie Essigsäure-methylester und -ethylester, ferner Nitrile, wie z.B. Acetonitril und Propionnitril, Benzonitril, Glutarsäuredinitril, darüber hinaus Amide, wie z.B. Dimethylformamid, Demethylacetamid und N-Methylpyrrolidon, sowie Dimethylsulfoxid, Tetramethylensulfon und Hexamethylphosphorsäuretriamid.

Das Verfahren kann in Gegenwart von Katalysatoren durchgeführt werden. Als Katalysatoren können bevorzugt verwendet werden: Imidazol, Triazol oder Diisopropylethylamin.

Die Reaktionstemperatur liegt zwischen etwa 0°C und 130°C, vorzugsweise zwischen etwa 20°C und 60°C. Das Verfahren wird vorzugsweise bei Normaldruck durchgeführt.

Die Aufarbeitung erfolgt in üblicher Weise.

Wie bereits erwähnt sind die Verbindungen der Formel (II) neu. Bevorzugt seien die Verbindungen der Formel (II) genannt, in denen

X und Y für Cl stehen,

$R^2$ für Wasserstoff steht,

$R^3$ für Monofluor-t-butyl oder 1-Cyclohexylethyl steht.

Ganz besonders bevorzugt seien Verbindungen der Formel (I) genannt, in denen $R^3$ für 1-Cyclohexylethyl steht und die absolute Konfiguration des C1 des Aminrestes R ist.

Die Herstellung der Verbindungen der Formel (II) erfolgt nach einem der bei 5. (oben) allgemein angegebenen Verfahren a-c. Die darin verwendeten Ausgangsverbindungen sind bekannt oder lassen sich nach allgemein bekannten Verfahren der Chemie darstellen.

Auch die Verfahren a-c werden in an sich bekannter Weise durchgeführt.

Die Ausgangsverbindungen werden im allgemeinen in etwa äquimolarem Verhältnis eingesetzt. Die Reduktionsmittel können in 1-10-fachem Überschuß eingesetzt werden.

Die Umsetzung kann in Gegenwart der bei dem Verfahren 3a erwähnten Verdünnungsmitteln erfolgen.

Im allgemeinen wird bei Temperaturen von 0 bis 130°C, bevorzugt zwischen 20 und 60°C gearbeitet. Bevorzugt wird bei Normaldruck gearbeitet.

Die Aufarbeitung erfolgt in an sich bekannter Weise.

Wie bereits erwähnt, lassen sich die Verbindungen der Formel (II) als Leistungsförderer für Tiere einsetzen.

Als Tiere, bei denen die Wirkstoffe der Formel (II) zur Förderung, insbesondere Leistungsförderung, und Beschleunigung des Wachstums und zur Verbesserung der Futterverwertung eingesetzt werden können, seien beispielsweise folgende Nutz-und Ziertiere genannt.

Warmblüter wie Rinder, Schweine, Pferde, Schafe, Ziegen, Katzen, Hunde, Kaninchen, Pelztiere, z.B. Nerze und Chinchilla, Geflügel, z.B. Hühner, Gänse, Enten, Truthähne, Tauben, Papageien und Kanarienvögel und Kaltblüter wie Fische, z.B. Karpfen und Reptilien, z.B. Schlangen.

Die Mengen der Wirkstoffe, die den Tieren zur Erreichung des gewünschten Effektes verabreicht wird, kann wegen der günstigen Eigenschaften der Wirkstoffe weitgehend variiert werden. Sie liegt vorzugsweise bei etwa 0,01 bis 50, insbesondere 0,1 bis 10 mg/kg Körpergewicht pro Tag. Die Dauer der Verabreichung kann von wenigen Stunden oder Tagen bis zu mehreren Jahren betragen. Die passende Menge des Wirkstoffs sowie die passende Dauer der Verabreichung hängen insbesondere von der Art, dem Alter, dem Geschlecht, dem Gesundheitszustand und der Art der Haltung und Fütterung der Tiere ab und sind durch jeden Fachmann leicht zu ermitteln.

Die Wirkstoffe der Formel (II) werden den Tieren nach den üblichen Methoden verabreicht. Die Art der Verabreichung hängt insbesondere von der Art, dem Verhalten und dem Gesundheitszustand der Tiere ab. So kann die Verabreichung einmal oder mehrmals täglich in regelmäßigen oder unregelmäßigen Abständen oral oder parenteral erfolgen.

Die erfindungsgemäßen Wirkstoffe eignen sich besonders für eine parenterale Anwendung, wobei sie mit geeigneten, vorzugsweise nicht wäßrigen, verträglichen Lösungs-bzw. Verdünnungsmitteln in eine anwendbare Formulierung gebracht werden.

Geeignete Formulierungsmittel sind vorzugsweise physiologische Vegetabilien wie z.B. Sesamöl, Erdnußöl oder Maiskeimöl. Diese Öle oder auch andere synthetische Triglyceride wie z.B. Miglycol® oder Myritol® können durch geeignete Zusätze verdickt werden wie z.B. gehärtetes Rizinusöl oder Al-Monostearat. Durch solche Kombinationen kann die Viskosität und damit die Depot-Wirkung in weiten Grenzen variiert werden.

Darüber hinaus sind Implantate aus Silicon bzw. hochmolekularen Polyglycolen oder anderen physiologisch verträglichen Polymeren möglich.

Aus Zweckmäßigkeitsgründen ist häufig eine orale Verabreichung, insbesondere im Rhythmus der Nahrungs-und/oder Getränkeaufnahme der Tiere, vorzuziehen.

Die Wirkstoffe können als reine Stoffmischung oder in formulierter Form, also in Mischung mit nicht-toxischen inerten Trägerstoffen beliebiger Art, z.B. mit Trägerstoffen und in Formulierungen, wie sie bei nutritiven Zubereitungen üblich sind, verabreicht werden.

Die Wirkstoffe werden gegebenenfalls in formulierter Form zusammen mit pharmazeutischen Wirkstoffen, Mineralsalzen, Spurenelementen, Vitaminen, Eiweißstoffen, Fetten, Farbstoffen und/oder Geschmacksstoffen in geeigneter Form verabreicht.

Die orale Verabreichung erfolgt vorzugsweise zusammen mit dem Futter und/oder Trinkwasser, wobei je nach Bedarf der Wirkstoff der Gesamtmenge oder nur Teilen des Futters und/oder Trinkwassers zugegeben wird.

Dir Wirkstoffe werden bei oraler Verabreichung nach üblichen Methoden durch einfaches Mischen als reine Stoffmischung, vorzugsweise in fein verteilter Form oder in formulierter Form in Mischung mit eßbaren nicht-toxischen Trägerstoffen, gegebenenfalls in Form eines Praemix oder eines Futterkonzentrates, dem Futter und/oder Trinkwasser beigefügt.

Das Futter und/oder Trinkwasser kann beispielsweise die Wirkstoffe in einer Gewichtskonzentration von etwa 0,01 bis 50, insbesondere 0,1 bis 10 ppm, enthalten. Die optimale Höhe der Konzentration der Wirkstoffe in dem Futter und/oder Trinkwasser ist insbesondere abhängig von der Menge der Futter-und/oder Trinkwasseraufnahme der Tiere und kann durch jeden Fachmann leicht ermittelt werden.

Bei parenteraler Verabreichung hängt die optimale Dosis insbesondere von der Häufigkeit der Verabreichung, der Tierart und dem Alter bzw. Gewicht der Tiere ab.

Die Art des Futters und seine Zusammensetzung ist hierbei ohne Belang. Es können alle gebräuchlichen oder speziellen Futterzusammensetzungen verwendet werden, die vorzugsweise das übliche, für eine ausgewogene Ernährung notwendige Gleichgewicht aus Energie-und Aufbaustoffen einschließlich Vitaminen und Mineralstoffen enthalten. Das Futter kann sich beispielsweise zusammensetzen aus pflanzlichen Stoffen, z.B. Heu, Rüben, Getreide, Getreidenebenprodukten, tierischen Stoffen, z.B. Fleisch, Fetten, Knochenmehl, Fischprodukten, Vitaminen, z.B. Vitamin A, D-Komplex und B-Komplex, Proteinen, Aminosäuren, z.B. DL-Methionin und anorganischen Stoffen, z.B. Kalk und Kochsalz.

Futterkonzentrate enthalten die Wirkstoffe neben eßbaren Stoffen, z.B. Roggenmehl, Maismehl, Sojabohnenmehl oder Kalk, gegebenenfalls mit weiteren Nähr-und Aufbaustoffen sowie Proteinen, Mineralsalzen und Vitaminen. Sie können nach den üblichen Mischmethoden hergestellt werden.

Vorzugsweise in Praemixen und Futterkonzentraten können die Wirkstoffe gegebenenfalls auch durch ihre Oberfläche bedeckende geeignete Mittel, z.B. mit nicht-toxischen Wachsen oder Gelatine vor Luft, Licht und/oder Feuchtigkeit geschützt werden.

## Beispiel A

Einfluß einer Einmalapplikation auf die Körpergewichtszunahme von Ratten.

Für den Versuch wurden weibliche Wistar-Ratten verwendet, die in Makrolonkäfigen (3 Tiere pro Käfig) gehalten wurden. Nach einer 3-tätigen Adaptationsphase wurde mit dem 21-tägigen Experiment begonnen. Es wurde sowohl der Einfluß einer einmaligen oralen Verabreichung als auch der Effekt einer einmaligen subcutanen Verabreichung auf die Körpergewichtszunahme der Ratten untersucht. Pro Behandlung wurden 12 Tiere verwendet. Die Wirkstoffe wurden in Placebo A 1040 (86 % Polyäthylenglykol, 10 % Glycerin, 4 % Wasser) gelöst und entweder über die Schlundsonde (5mg Wirkstoff in 1,0 ml Placebo) oder subcutan (5 mg Wirkstoff in 0,2 ml Placebo) verabreicht.

Wirkstoff I = N-[2-(4-Amino-3,5-dichlor-phenyl)-2-hydroxy-ethyl]-N-t-butylamin

Wirkstoff II = N-[2-(4-Amino-3,5-dichlor-phenyl)-2-(1,2-dimethylpropyl-dimethylsilyloxy)-ethyl]-N-t-butylamin

Die Ergebnisse des Versuches sind in Tabelle A zusammengestellt.

Tabelle A

Körpergewichtszunahme (g) von weiblichen Wistar-Ratten nach Einmalapplikation (5 mg/Tier)

| Behandlung | Tag 0 - Tag 9 | | Tag 0 - Tag 21 | |
|---|---|---|---|---|
| Kontrolle (orale Verabr.) | 15.0 | (100) | 31.1 | (100) |
| 5 mg Wirkstoff I (Vergleich) oral verabreicht | 21.3 | (142) | 38.7 | (124) |
| 5 mg Wirkstoff II oral verabreicht | 26.7 | (178) | 44.3 | (142) |
| Kontrolle subcut. verabreicht | 14.0 | (100) | 29.7 | (100) |
| 5 mg Wirkstoff I (Vergleich) subcut. verabreicht | 22.8 | (163) | 39.5 | (132) |
| 5 mg Wirkstoff II subcut. verabreicht | 26.7 | (190) | 48.4 | (163) |

Beispiel B

Ratten-Fütterungsversuch

Weibliche Laborratten 90-110 g schwer vom Typ SPF Wistar (Züchtung Hagemann) werden ad lib mit Standard Rattenfutter, das mit der gewünschten Menge Wirkstoff versetzt ist, gefüttert. Jeder Versuchsansatz wird mit Futter der identischen Charge durchgeführt, so daß Unterschiede in der Zusammensetzung des Futters die Vergleichbarkeit der Ergebnisse nicht beeinträchtigen können.

Die Ratten erhalten Wasser ad lib.

Jeweils 12 Ratten bilden eine Versuchsgruppe und werden mit Futter, das mit der gewünschten Menge Wirkstoff versetzt ist, gefüttert. Eine Kontrollgruppe erhält Futter ohne Wirkstoff. Das durchschnittliche Körpergewicht sowie die Streuung in den Körpergewichten der Ratten ist in jeder Versuchsgruppe gleich, so daß eine Vergleichbarkeit der Versuchsgruppen untereinander gewährleistet ist.

Während des 13-tägigen Versuchs werden Gewichtszunahme und Futterverbrauch bestimmt.

Es werden die aus der Tabelle ersichtlichen Ergebnisse erhalten:

Tabelle B

Ratten Fütterungsversuch

| Wirkstoff | Dosis ppm | Tierzahl | Zuwachs (relativ zur Kontrolle) |
|---|---|---|---|
| Kontrolle | - | 48 | 100 |
| Bsp.-Nr. 1 | 25 | 12 | 133 |
| Bsp.-Nr. 7 | 25 | 24 | 132 |
| Bsp.-Nr. 8 | 25 | 24 | 128 |

Herstellungsbeispiele

Beispiel 1

1-(4-Amino-3,5-dichlor-phenyl)-2-(1-cyclohexyl-ethylamino)-ethanol

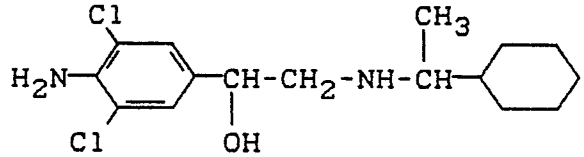

21 g 4-Amino-3,5-dichlor-ω-(1-cyclohexyl-ethylamino)-acetophenon werden in 180 ml Methanol und 36 ml Wasser gelöst und tropfenweise mit einer Lösung von 5,8 g Natriumborhydrid in 18 ml Wasser versetzt, wobei der pH-Wert durch Zugabe von ca. 10%iger Salzsäure zwischen 3 und 7 gehalten wird. Nach beendeter Reaktion wird stark sauer gestellt und eingeengt. Es wird mit Ammoniak basisch gestellt, mit Essigester extrahiert, die Essigester-Phase zweimal mit Wasser gewaschen, getrocknet und eingeengt. Die erhaltenen Kristalle werden mit Heptan verrührt und abgesaugt. Man erhält 13,3 g farblose Kristalle vom Schmelzpunkt: 106-108°C.

Analog Beispiel 1 wurde hergestellt:

Beispiel 2

1-(4-Amino-3,5-dichlorphenyl)-2-(1-cyclohexyl-ethylamino)-propanol, isoliert als Hydrochlorid vom Schmp.: 265°C.

Beispiel 3

1-(4-Amino-3,5-dichlorphenyl)-2-[(R)-1-cyclohexyl-ethylamino)-ethanol

10,9 g (29,8 mmol) 4-Amino-3,5-dichlor-w-((R)-1-cyclohexyl-ethylamino)-acetophenon-hydrochlorid (erhalten aus 4-Amino-3,5-dichlor-w-brom-acetophenon durch Umsetzung mit (R)-1-Cyclohexyl-ethylamin werden in 75 ml Methanol und 18 ml Wasser gelöst und bei einem pH-Wert zwischen 2 und 7 mit einer Lösung von 2,5 g Natriumborhydrid in 8 ml Wasser tropfenweise versetzt. Es wurd auf pH 9 eingestellt, eingeengt und mit Essigester extrahiert. Die Essigesterphase wird mit Wasser gewaschen, getrocknet und eingeengt. Das kristalline Produkt wird mit Heptan verrührt, abgesaugt und mit Heptan gewaschen. Man erhält 6.5 g einer farblosen Substanz vom Schmelzpunkt 110 bis 116°C.

Durch fraktionierte Umkristallisation aus Acetonitril werden die beiden Diastereomeren getrennt

Physikalische Daten:

Diastereomer A: Schmelzpunkt: 142° C

$[\alpha]^{20}_{589}$ = -50,65 (c = 0,69, Methanol)

Diastereomer B: Schmelzpunkt: 108-111° C

$[\alpha]^{20}_{589}$ = 27,26 (c = 0,8576, Methanol)

Die absoluten Konfigurationen am Ethanol C-Atom 1 der beiden Diastereomeren A und B liegen noch nicht fest.

Beispiel 4

1-(4-Amino-3,5-dichlor-phenyl)-O-(1,2-dimethylpropyldimethylsilyl)-2-(1-cyclohexylethylamino)-ethanol

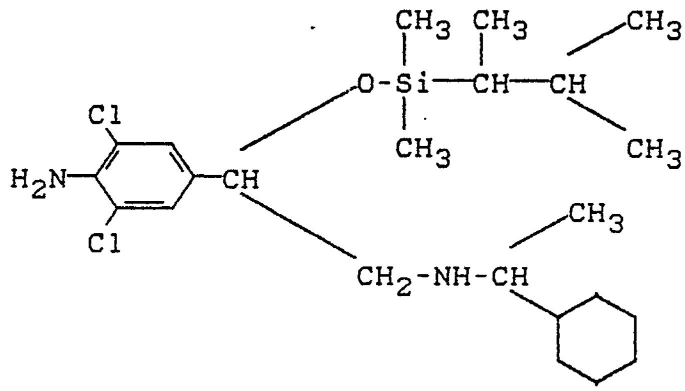

937 mg (14.3 mmol) Imidazol werden in 15 ml abs. DMF mit 2,36 g (7,15 mmol) der Verbindung vom Beispiel 1 versetzt. Bei 0-5°C werden nun 1,52 g Dimethyl-1,2-dimethyl-propylsilylchlorid zugegeben. Es wird 2 Stunden unter Eiskühlung gerührt, eingeengt, in Toluol/Wasser aufgenommen, getrennt, die Toluolphase 4 x mit Wasser gewaschen, getrocknet, eingeengt und an der Ölpumpe von Lösungsmittelresten befreit. Man erhält 3.2 g eines nahezu farblosen Öles.

Rf-Wert: 0,62

Rf-Wert: Substanz Beispiel 1: 0,24.
DC Aluminiumrolle Merck, Kieselgel 60, F 254, Schichtdicke 0,2 mm.
Fließmittel: Toluol/Ethanol im Volumenverhältnis 6:1.

Beispiel 5

Analog der Vorschrift in Beispiel 4 werden mit 1,52 g Dimethyl-1,2-dimethylpropylsilylchlorid 2,36 g des Diastereomeren A (gemäß Beispiel 3 erhalten) umgesetzt. Man erhält das dem Diastereomeren A entsprechende Silylderivat. Es hat einen Rf-Wert: 0,49 (DC-Aluminiumrolle Merck, Kieselgel 60 F 254, Schichtdicke 0,2 mm). Fließmittel Toluol/Ethanol im Volumenverhältnis 10:1.

Beispiel 6

Analog der Vorschrift in Beispiel 5 wird mit dem Diastereomeren B (gemäß Beispiel 3 erhalten) das dem Diastereomeren B entsprechende Dimethyl-1,2-dimethyl-propyl-silylderivat erhalten. Rf-Wert 0.49 (DC-Aluminiumrolle, Merck, Keiselgel 60 F 254, Schichtdicke 0,2 mm). Fließmittel Toluol/Ethanol im Volumenverhältnis 10:1.

Beispiel 7

1-(4-Amino-3,5-dichlor-phenyl)-2-(2-fluor-1,1-dimethyl-ethyl-amino)-ethanol

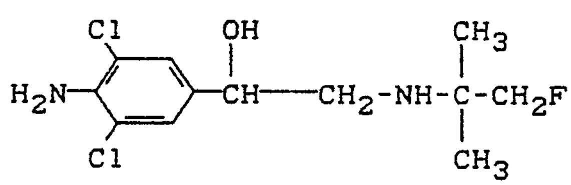

8,5 g 4-Amino-3,5-dichlor-ω-(2-fluor-1,1-dimethyl-ethyl-amino)-acetophenonhydrochlorid werden in 60 ml Methanol und 15 ml Wasser gelöst und tropfenweise mit einer Lösung von 2,9 g Natriumborhydrid in 10 ml Wasser versetzt, wobei der pH-Wert durch Zugabe von 2N Salzsäure zwischen 3 und 7 gehalten wird. Nach beendeter Reaktion wird stark sauer gestellt und eingeengt. Es wird mit Ammoniak basisch gestellt, mit Essigester extrahiert, die Essigesterphase zweimal mit Wasser gewaschen, getrocknet und eingeengt. Die erhaltenen Kristalle werden aus wenig Acetonitril umkristallisiert. Man erhält 5,4 g farblose Kristalle vom

Schmelzpunkt 110°C.

Beispiel 8

1-(4-Amino-3,5-dichlorphenyl)-O-(1,2-dimethylpropyl-dimethylsilyl)-2-(2-fluor-1,1-dimethyl-ethylamino)-ethanol

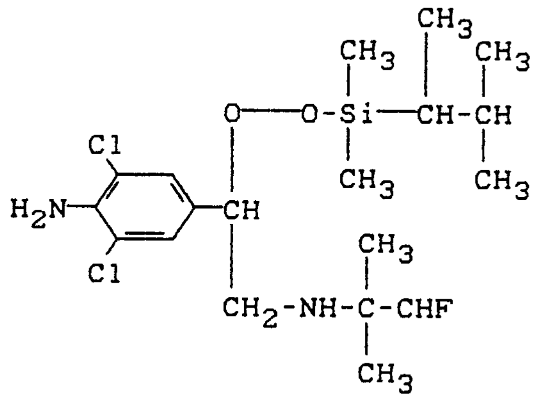

5,9 g 1-(4-Amino-3,5-dichlorphenyl)-2-(2-fluor-1,1-dimethyl-ethyl-amino)-ethanol und 4 g Imidazol werden in 60 ml getrocknetem Dimethylformamid gelöst und bei 0°C tropfenweise mit 7,26 g Pentyl-dimethylchlorsilan versetzt. Man läßt 2 Stunden bei Raumtemperatur nachrühren und engt dann am Rotationsverdampfer ein. Der Eindampfrückstand wird mit 100 ml Toluol versetzt, dreimal mit Wasser gewaschen, getrocknet, eingeengt und im Hochvakuum vei 80°C getrocknet. Man erhält 7,2 g hellgelbes Öl mit einem Rf-Wert von 0,63 (Toluol/Ethanol = 10/1).

Beispiel 9

1-(4-Amino-3-cyano-phenyl)-O-(1,2-dimethylpropyl-dimethylsilyl)-2-isopropylamino-ethanol vom Rf-Wert: 0,46.

DC Aluminiumrolle Merck, Kieselgel 60, F 254, Schichtdicke 0,2 mm.

Fließmittel: Toluol/Ethanol im Volumenverhältnis 3:1.

Beispiel 10

1-(4-Amino-3,5-dichlorphenyl)-O-(1,2-dimethylpropyl-dimethylsilyl)-2-[(R)-1-cyclohexyl-ethylamino]-ethanol, hergestellt aus Beispiel 3 mit Dimethyl-1,2-dimethylpropylsilylchlorid.

Rf-Wert: 0,49 (Fließmittel: Toluol/Ethynol 10:1).

Beispiel 11

1-(4-Amino-3,5-dichlorphenyl)-O-(dimethylthexylsilyl)-2-[(R)-1-cyclohexyl-ethylamino)-ethanol

Beispiel 12

1-(4-Amino-3,5-dichlorphenyl)-O-(dimethylthexylsilyl)-2-[(R)-1-cyclohexyl-ethylamino)-ethanol

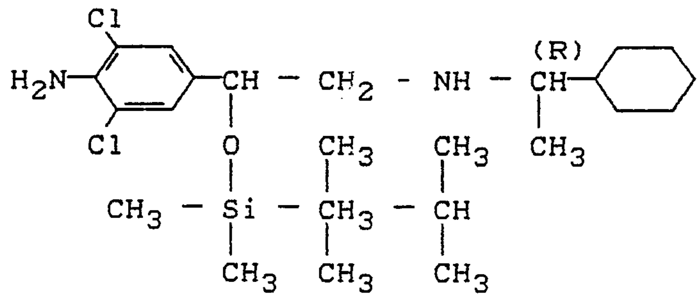

Herstellung analog Beispiel 4 durch Umsetzung von Beispiel 3 mit Dimethylthexylsilylchlorid in DMF in Gegenwart von Imidazol 24 Stungen bei 60°C.

Rf-Wert: 0,57; Fließmittel: Toluol/Ethanol im Volumenverhältnis 10:1.

**Ansprüche**

1) Verfahren zur Leistungsförderung von Nutztieren mit Hilfe von monosilylierten Aminophenylethylamin-Derivaten der allgemeinen Formel I

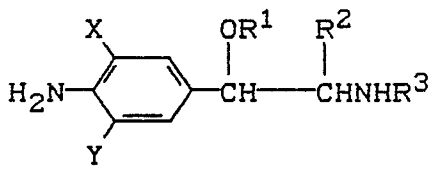

(I)

in der

X und Y gleich oder verschieden sind und für Wasserstoff, Halogen oder CN stehen,

$R^1$ für den Rest

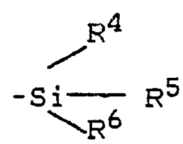

steht,

$R^2$ für Wasserstoff oder Methyl steht,

$R^3$ für t-Butyl, Isopropyl, Monofluor-t-butyl, 1-Cyclohexyl-ethyl steht,

$R^4$,$R^5$,$R^6$ einen geradkettigen oder verzweigten Alkylrest bedeuten,

und deren physiologisch verträglichen Salzen, dadurch gekennzeichnet, daß man diese zu Beginn der Aufzuchtperiode verabreicht.

2. Verbindungen der allgemeinen Formel (I)

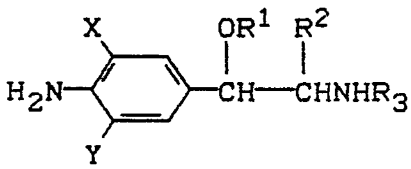

(I)

in der

X und Y gleich oder verschieden sind und für Wasserstoff, Halogen oder CN stehen,

$R^1$ für den Rest

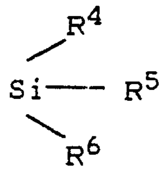

steht, in welchem $R^4$, $R^5$, $R^6$ einen geradkettigen oder verzweigten Alkylrest bedeuten, $R^2$ für Wasserstoff oder Methyl steht, $R^3$ für Monofluor-t-butyl, 1-Cyclohexyl-ethyl steht, und ihre physiologisch verträglichen Salze.

3. Verfahren zur Herstellung der neuen Verbindungen der Formel (I)

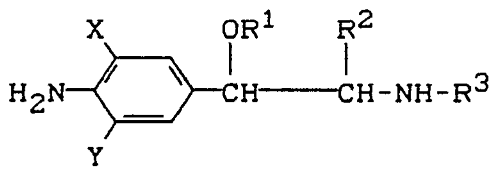

(I),

in welcher X und Y gleich oder verschieden sind und für Wasserstoff, Halogen oder CN stehen, $R^1$ für den Rest

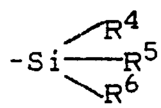

steht, in welchem $R^4$, $R^5$, $R^6$ einen geradkettigen oder verzweigten Alkylrest bedeuten, $R^2$ für Wasserstoff oder Methyl steht, $R^3$ für Monofluor-t-butyl, 1-Cyclohexyl-ethyl steht, dadurch gekennzeichnet, daß man

a) Verbindungen der Formel (II)

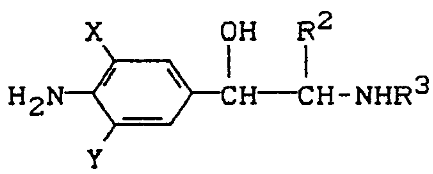

(II)

in welcher X, Y, $R^2$ und $R^3$ die oben angegebene Bedeutung haben, mit Silylierungsmitteln der Formel (III) $R^4$ $R^5$ $R^6$ Si Z (III), in der Z Halogen, CN, $OSO_2$ $CF_3$; -O-Si-$R^4R^5R^6$ oder -O-$SO_2$-O-Si-$R^4R^5R^6$ bedeutet, und $R^4R^5R^6$ die oben angegebene Bedeutung haben, umsetzt, oder

b) Verbindungen der Formel (IV)

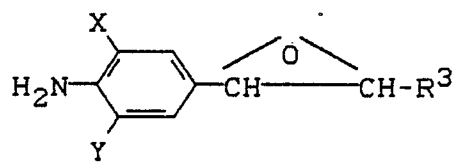

(IV)

in welcher
X,Y,$R^3$ die oben angegebene Bedeutung besitzen,
mit einen silylierten Amin der Formel (V)

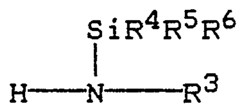

(V)

in welcher
$R^3R^4R^5R^6$ die oben angegebene Bedeutung besitzt
umsetzt.

4. Verbindungen der Formel (II)

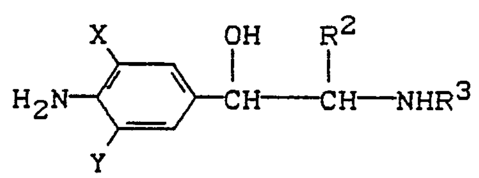

(II)

in welcher
X und Y unabhängig voneinander für Wasserstoff, Halogen oder CN stehen,
$R^2$ für Wasserstoff oder Methyl steht,
$R^3$ für Monofluor-t-butyl oder 1-Cyclohexyl-ethyl steht.

5. Verfahren zur Herstellung der Verbindungen der Formel (II)

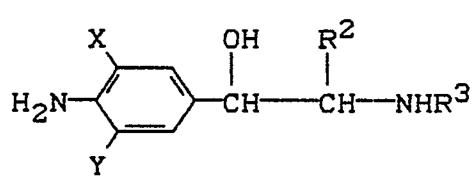

(II)

in welcher
X und Y unabhängig voneinander für Wasserstoff, Halogen oder CN stehen,
$R^2$ für Wasserstoff oder Methyl steht,
$R^3$ für Monofluor-t-butyl oder 1-Cyclohexyl-ethyl steht
dadurch gekennzeichnet, daß man

a) Verbindungen der Formel (VI)

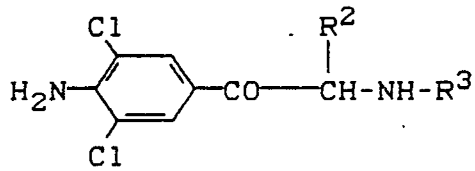

(VI),

in welcher X,Y,$R^2$ und $R^3$ die oben angegebene Bedeutung besitzt, katalytisch oder mit Reduktionsmitteln reduziert, oder

b) Verbindungen der Formel (IV)

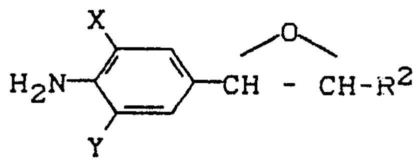

(IV),

in welcher X,Y und $R^2$ die oben angegebene Bedeutung hat, mit einem Amin der Formel (VII)

$H_2N-R^3$, (VII)

in welcher $R^3$ die oben angegebene Bedeutung hat, umsetzt, oder

c) indem man die Verbindung der Formel (VIII)

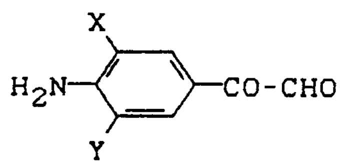

(VIII),

in welcher X und Y die oben angegebene Bedeutung haben, mit einer Verbindung der Formel (VII)

$H_2N-R^3$

in welcher $R^3$ die oben angegebene Bedeutung hat in Gegenwart eines Reduktionsmittels umsetzt.

6. Mittel zur Leistungsförderung von Tieren gekennzeichnet durch einen Gehalt an Verbindungen der Formel (II) gemäß Anspruch 4.

7. Tierfutter, Trinkwasser für Tiere, Zusätze für Tierfutter und Trinkwasser für Tiere, gekennzeichnet durch einen Gehalt an Verbundingen der Formel (II) gemäß Anspruch 4.

8. Verwendung von Verbindungen der Formel (II) gemäß Anspruch 4 zur Leistungsförderung von Tieren.

9. Verfahren zur Herstellung von Mitteln zur Leistungsförderung von Tieren, dadurch gekennzeichnet, daß man Verbindungen der Formel (II) gemäß Anspruch 4 mit Streck-und/oder Verdünnungsmitteln vermischt.

10. Verfahren zur Herstellung von Tierfutter, Trinkwasser für Tiere oder Zusätze für Tierfutter und Trinkwasser für Tiere, dadurch gekennzeichnet, daß man Verbindungen der Formel (II) gemäß Anspruch 4 mit Futtermitteln oder Trinkwasser und gegebenenfalls weiteren Hilfsstoffen vermischt.